# EUROPÄISCHE PATENTSCHRIFT

(11) **EP 2 958 776 B1**
(45) Veröffentlichungstag und Bekanntmachung des Hinweises auf die Patenterteilung: **18.10.2017**
(21) Anmeldenummer: 14708498.2
(22) Anmeldetag: 18.02.2014
(51) Int. Cl.: B60R 21/239, B60R 21/217

(54) **AIRBAGMODUL FÜR EIN KRAFTFAHRZEUG**
AIRBAGMODULE FOR AUTOMOBILE VEHICLE
MODULE DE COUSSIN GONFLABLE POUR VEHICULE AUTOMOBILE

(30) Priorität: 21.02.2013 DE 102013202846
(43) Veröffentlichungstag der Anmeldung: 30.12.2015
(73) Patentinhaber: Takata AG, 63743 Aschaffenburg (DE)
(72) Erfinder: FECHNER, Tobias, 63743 Aschaffenburg (DE); BUCHHOLZ, Andre, 10249 Berlin (DE); WEIS, Peter, 63874 Dammbach (DE)
(74) Vertreter: Maikowski & Ninnemann Patentanwälte Partnerschaft mbB
(86) Internationale Anmeldenummer: PCT/EP2014/053129
(87) Internationale Veröffentlichungsnummer: WO 2014/128121

(56) Entgegenhaltungen:
- WO-A1-2011/157631
- DE-A1-102006 010 953
- DE-A1-102011 015 309
- GB-A- 2 306 409

## Beschreibung

Die Erfindung betrifft ein Airbagmodul für ein Kraftfahrzeug nach dem Oberbegriff des Anspruchs 1.

Ein derartiges Airbagmodul umfasst einen Gassack, der zum Schutz einer Person, insbesondere eines Fahrzeuginsassen, mittels eines Gasgenerators aufblasbar ist, sowie ein Modulgehäuse zur Aufnahme des Gassackes und eine Gassackhalterung zur Festlegung des Gassackes am Modulgehäuse, welche üblicherweise mit letzterem verbunden ist, z. B. über mindestens eine Schraube.

Das Airbagmodul weist regelmäßig weiterhin eine Entlüftungsöffnung auf, durch die hindurch aus dem Airbagmodul stammendes Gas, welches vom Gasgenerator zum Aufblasen des Gassackes freigesetzt wurde, aus dem Airbagmodul entweichen kann, wobei zur Regulierung des Gasdrucks im Gassack der Austrittsquerschnitt der Entlüftungsöffnung steuerbar ist. Hierzu ist ein (von dem Gassack verschiedenes) aufblasbares Element vorgesehen, das an der Gassackhalterung festgelegt ist und das im aufgeblasenen Zustand mit einer Entlüftungsöffnung des Airbagmodules zusammenwirkt, um deren Austrittsquerschnitt zu steuern, also insbesondere verändern zu können.

Dem aufblasbaren Element ist eine (von dem zum Aufblasen des Gassackes dienenden Gasgenerator verschiedene) Auslöseeinheit zugeordnet, über die das aufblasbare Element, z.B. sensorgesteuert, mit Gas befüllbar ist, um eine gewünschte Steuerung bzw. Veränderung des Austrittsquerschnitts der zugeordneten Entlüftungsöffnung des Airbagmodules herbeizuführen.

Mit einer derartigen Vorrichtung ist es möglich, das sogenannte Entlüften eines Gassackes, d. h., das Ablassen derjenigen Gase, welche zum Schutz eines Fahrzeuginsassen von einem Gasgenerator freigesetzt und in den Gassack eingebracht wurden, gezielt zu steuern, etwa in Abhängigkeit von der Art und Schwere eines Unfalls sowie von der Größe und/oder dem Gewicht und/oder der Sitzposition einer zu schützenden Person, was insbesondere mittels Sensoren erfasst werden kann.

Zum gezielten Befüllen des aufblasbaren Elementes mit einem Gas, um die gewünschte Regulierung des Gasdruckes im Gassack bzw. eine gewünschte Steuerung des Austrittsquerschnittes der zugehörigen Entlüftungsöffnung herbei zu führen, umfasst die Auslöseeinheit einer Gasquelle, welche beispielsweise pyrotechnisch gezündet werden kann und sodann ein Gas freisetzt, mit dem das aufblasbare Element befüllt wird, so dass es mit der besagten Belüftungsöffnung zusammenwirkt und deren Austrittsquerschnitt steuert (ändert).

Dabei kann gemäß einer Variante die Entlüftungsöffnung ursprünglich von einem Abdeckteil überdeckt sein, so dass die Steuerung des Austrittsquerschnitts mittels des aufblasbaren Elementes in der Weise erfolgt, dass das aufblasbare Element eine zumindest teilweise Freigabe der Entlüftungsöffnung bewirkt, z.B. durch entsprechende Einwirkung auf das Abdeckteil. Nach einer anderen Variante kann die Entlüftungsöffnung ursprünglich frei liegen und erst beim Befüllen des aufblasbaren Elementes mit Gas zumindest teilweise überdeckt werden. Auch ist es möglich, dass die Entlüftungsöffnung anfänglich durch ein Abdeckteil teilweise überdeckt ist und durch Einwirkung des aufblasbaren Elementes der Überdeckungsgrad geändert wird.

Ein Airbagmodul mit einem derartigen Mechanismus zur Regulierung des Gasdruckes im Gassack ist aus der WO 2011/157 631 A1 bekannt. Auf diese Druckschrift wird vorliegend insbesondere hinsichtlich des Befüllens des aufblasbaren Elementes mit einem Gas sowie hinsichtlich des Zusammenwirkens des aufblasbaren Elementes mit einer Entlüftungsöffnung des Airbagmodules vollumfänglich Bezug genommen.

Gemäß der WO 2011/157 631 A1 ist die dem aufblasbaren Element zugeordnete Auslöseeinheit unterhalb des Bodens des Modulgehäuses angeordnet und im Gehäuseboden ein Durchlass ausgebildet, durch den hindurch die von der Auslöseeinheit freigesetzten Gase in das hiermit zu befüllende aufblasbare Element eingeleitet werden können.

Der Erfindung liegt das Problem zugrunde, ein Airbagmodul der eingangs genannten Art weiter zu verbessern.

Dieses Problem wird erfindungsgemäß durch die Schaffung eines Airbagmodules mit den Merkmalen des Anspruchs 1 gelöst.

Danach ist die Auslöseeinheit innerhalb des Modulgehäuses in einem Fortsatz des Modulgehäuses, der von einer den Gassack aufnehmenden Hauptkammer des Modulgehäuses absteht, angeordnet ist. Die Auslöseeinheit lässt sich dabei in einfacher Weise mittels eines, z.B. aus Kunststoff bestehenden, Befestigungselementes, insbesondere mittels genau eines einzelnen Befestigungselementes, im Modulgehäuse bzw. genauer in dessen Fortsatz fixieren. Hierzu kann die Auslöseeinheit formschlüssig mit dem Befestigungselement in Verbindung stehen, insbesondere in der Weise, dass sich die Auslöseeinheit an ihrer Außenseite am Befestigungselement abstützt, gegebenenfalls auch über die gesamte Ausdehnung der Außenseite. So greift das Befestigungselement in den Fortsatz ein und umfasst dort die Auslöseeinheit zumindest abschnittsweise.

Hierdurch wird einerseits die Auslöseeinheit vor Umwelteinflüssen geschützt und andererseits ist auch die Umgebung des Airbagmoduls vor Einwirkungen der Auslöseeinheit beim Zünden der zugehörigen Gasquelle geschützt.

Der erfindungsgemäßen Lösung scheint die Schwierigkeit entgegenzustehen, dass das Modulgehäuse durch den in einem zusammengestauchten bzw. gefalteten Zustand hierin untergebrachten Gassack belegt ist und daher im Modulgehäuse kein Raum für die Anordnung der dem aufblasbaren Element zugeordneten Auslöseeinheit zur Verfügung steht.

Es wurde jedoch erkannt, dass vorliegend eine Anordnung der Auslöseeinheit in einem Fortsatz des Modulgehäuses technisch möglich und vorteilhaft ist, der von der den gefalteten Gassack aufnehmenden Kammer ("Hauptkammer") des Modulgehäuses absteht und einstückig mit dieser geformt ist. Hierdurch kann erreicht werden, dass die Auslöseeinheit einerseits in einem von den Wänden des Modulgehäuses begrenzten (und geschützten) Raum aufgenommen ist, gleichzeitig aber separat von dem im Modulgehäuse vorgesehenen Gassack untergebracht werden kann.

Gemäß einer Ausführungsform ist jener Fortsatz längs (axial) erstreckt und im Querschnitt ringförmig, insbesondere kreisringförmig umlaufend ausgeführt.

Konkret kann die Auslöseeinheit zwischen dem Befestigungselement und einem Anschlag des Modulgehäuses, insbesondere einem Anschlag an einem zur Aufnahme der Auslöseeinheit vorgesehenen Fortsatz des Modulgehäuses, gehalten sein.

Ferner kann das Befestigungselement (z. B. in Form eines Befestigungsclips) mindestens einen Rasthaken aufweisen, der an dem Modulgehäuse und/oder der Gassackhalterung verrastbar ist, um die Fixierung der Auslöseeinheit am Modulgehäuse zu erreichen; also entweder eine direkte Fixierung oder eine indirekte Fixierung über die mit dem Modulgehäuse verbundene Gassackhalterung.

Die Anordnung kann dabei derart ausgeführt sein, dass der mindestens eine Rasthaken des Befestigungselementes im verrasteten Zustand durch die Auslöseeinheit an einer Entrastung gehindert wird, z. B. indem der Rasthaken mit der Auslöseeinheit in Kontakt gerät, wenn er derart verformt wird, dass er mit der Gassackhalterung außer Eingriff geraten könnte und hierdurch eine weitere Verformung des Rasthakens verhindert wird.

Bei einem Auslösen der der Auslöseeinheit zugeordneten Gasquelle und einem hiermit verbundenen (radialen) Ausdehnen der Auslöseeinheit können zudem die Rasthaken des Befestigungselementes tendenziell noch derart weggedrückt werden, dass hierdurch die Verbindung zwischen Befestigungselement bzw. Rasthaken einerseits und Gassackhalterung andererseits sogar noch verstärkt wird.

Das mittels der Auslöseeinheit mit Gas befüllbare aufblasbare Element, welches z. B. als ein aufblasbarer Schlauch ("Druckschlauch") ausgeführt sein kann, ist vorteilhaft innerhalb des zugeordneten Gassackes angeordnet; es kann jedoch auch außerhalb des Gassackes liegen.

Das zur Fixierung der Auslöseeinheit im Modulgehäuse dienende Befestigungselement kann dabei weiterhin auch zur Festlegung des aufblasbaren Elementes dienen, z. B. indem der mindestens eine Rasthaken und/oder ein Kopf des Befestigungselementes zur Fixierung des aufblasbaren Elementes an der Gassackhalterung vorgesehen ist.

Die Anordnung und Befestigung einerseits der Auslöseeinheit innerhalb des Modulgehäuses und andererseits des aufblasbaren Elementes innerhalb des Gassackes kann dann mittels der Gassackhalterung und des Befestigungselementes in einem Arbeitsgang erfolgen.

Weitere Einzelheiten und Vorteile der Erfindung werden bei der nachfolgenden Beschreibung eines Ausführungsbeispieles anhand der Figuren deutlich werden.

Es zeigen:
- Fig. 1: einen Ausschnitt eines Airbagmodules, das einen Gassack, einen Gasgenerator zum Aufblasen des Gassackes sowie ein Modulgehäuse zur Aufnahme des Gassackes umfasst;
- Fig. 2: ein Detail des Airbagmodules aus Figur 1 im Bereich eines Befestigungselementes, über das ein zur Regulierung des Innendruckes des Gassackes vorgesehenes aufblasbares Element sowie eine zugehörige Auslöseeinheit am Airbagmodul festgelegt sind;
- Fig. 3: einen Ausschnitt des Bodenbereiches des Modulgehäuses aus Figur 1.

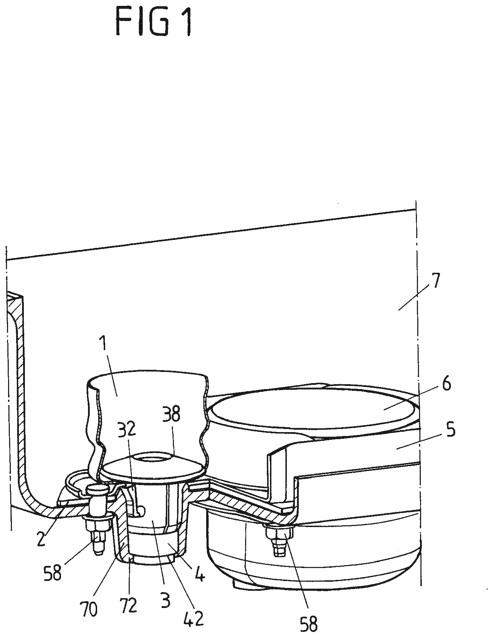

Figur 1 zeigt in einer perspektivischen Darstellung einen Ausschnitt eines Airbagmodules für ein Kraftfahrzeug, das einen in einem Modulgehäuse 7 angeordneten, zum Schutz eines Fahrzeuginsassen aufblasbaren Gassack 2 sowie einen am Modulgehäuse 7 angeordneten Gasgenerator 6 zum Aufblasen des Gassackes 2 umfasst. Zur Festlegung des Gassackes 2 am Modulgehäuse 7 ist dabei eine Gassackhalterung 5, hier in Form eines Haltebleches, vorgesehen, welche durch geeignete Befestigungsmittel 58, hier in Form von Schrauben und zugeordneten Muttern, am Modulgehäuse 7, genauer an dessen Boden befestigt ist, wobei der Gassack 2 z.B. zwischen der Gassackhalterung 5 und dem Modulgehäuse 7 verklemmt wird.

Der Gassack 2 eines derartigen Airbagmodules kann, in der Regel sensorgesteuert, mittels des Gasgenerators 6 mit Gas befüllt werden, so dass er aus dem Modulgehäuse 7 austritt und im entfalteten, aufgeblasenen Zustand ein Gaskissen zum Schutz eines Fahrzeuginsassen (oder gegebenenfalls auch einer außerhalb des Kraftfahrzeugs befindlichen Person) bildet.

Je nach Art und Schwere des Unfalls sowie in Abhängigkeit von Gewicht, Größe und Position der zu schützenden Person können dabei unterschiedliche Druckverhältnisse innerhalb des Gassackes 2 vorteilhaft sein. Es ist daher bekannt, vergleiche etwa WO 2011/157 631 A1, den Innendruck des Gassackes 2 bei und/oder nach dem Befüllen mit Gas aus dem Gasgenerator 6 gezielt zu steuern. Hierzu dient gemäß der WO 2011/157 631 A1 z. B. ein aufblasbares Element, insbesondere in Form eines Schlauches, dem eine von dem Gasgenerator verschiedene Gasquelle zugeordnet ist und das im mit Gas befüllten Zustand in definierter Weise mit einer Entlüftungsöffnung des Airbagmodules zusammenwirkt, um den Innendruck des Gassackes zu steuern. Dies kann insbesondere in der Weise erfolgen, dass durch das Befüllen des aufblasbaren Elementes mit Gas der Austrittsquerschnitt der Entlüftungsöffnung veränderbar ist, z. B., in dem das aufblasbare Element in definierter Weise mit einem der Entlüftungsöffnung zugeordneten Abdeckteil zusammenwirkt bzw. selbst ein solches Abdeckteil bildet. Die Entlüftungsöffnung kann dabei am Gassack selbst vorgesehen sein.

Für weitere Einzelheiten zum Aufbau und zur Funktion einer solchen Vorrichtung sei auf die WO 2011/157 631 A1 verwiesen, auf die in dieser Hinsicht vollumfänglich Bezug genommen wird.

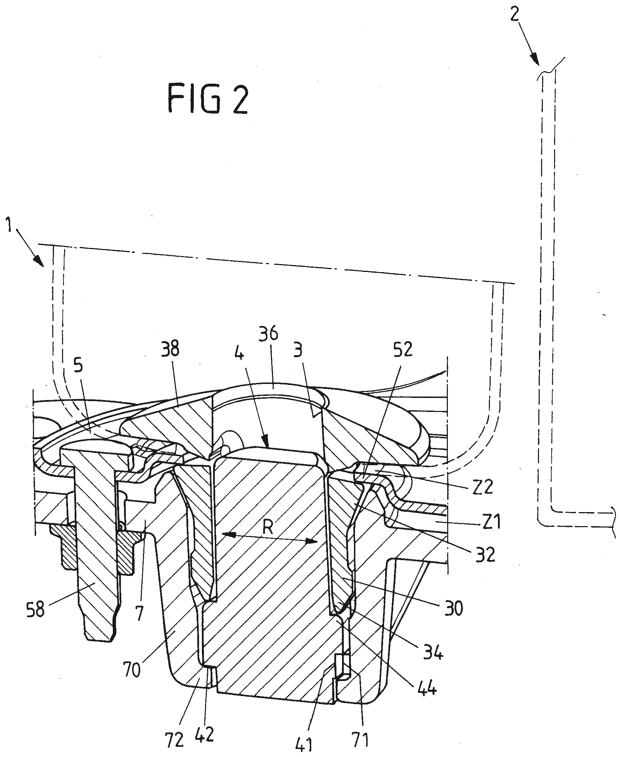

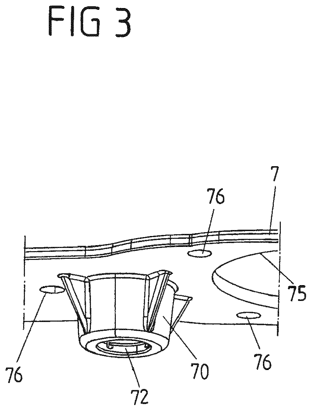

Vorliegend geht es im Weiteren vor allem um die Anordnung und Fixierung des aufblasbaren Elementes 1 sowie der zugehörigen Auslöseeinheit 4 am bzw. im Airbagmodul, was nachfolgend anhand der Figur 1 sowie der Detaildarstellungen gemäß Figur 2 und 3 erläutert werden wird.

Figur 2 zeigt dabei einen Ausschnitt des Airbagmodules aus Figur 1 im Bereich der Auslöseeinheit 4 und eines zugehörigen Befestigungselementes 3, wobei zur besseren Erkennbarkeit einzelner Details der Gassack 2 sowie das aufblasbare Element 1 nicht mit dargestellt sind. Und Figur 3 zeigt einen Teil des Modulgehäuses 7 aus Figur 1, und zwar konkret einen Ausschnitt des Bodenbereichs jenes Gehäuses, an welchem der Gassack 2 und der Gasgenerator 6 sowie das aufblasbare Element 1 und die Auslöseeinheit 4 angeordnet sind.

Wie in den Figuren 1 und 2 erkennbar, ist die Auslöseeinheit 4 innerhalb des Modulgehäuses 7 angeordnet, so dass sie von Wänden des Modulgehäuses 7 umgeben ist. Konkret befindet sich die Auslöseeinheit 4 in einem Fortsatz 70 des Modulgehäuses, der von der Hauptkammer des Modulgehäuses 7 absteht, in welcher der (gefaltete) Gassack 2 angeordnet ist und in welche der zum Aufblasen des Gassackes 2 dienende Gasgenerator 6 hineinragt.

Der Fortsatz 70 des Modulgehäuses 7 ist (axial) längserstreckt und weist einen ringförmigen, insbesondere kreisringförmigen, Querschnitt auf, so dass die Auslöseeinheit 4 axial in den Fortsatz 70 einführbar ist. Er ist im Ausführungsbeispiel einstückig an der Wandung der Hauptkammer des Modulgehäuses 7, genauer an deren Boden, angeformt.

Eine definierte (axiale) Positionierung der Auslöseeinheit 4 in dem Fortsatz 70 des Modulgehäuses 7 erfolgt durch einander zugeordnete Anschläge 42, 72 der Auslöseeinheit 4 einerseits und des Fortsatzes 70 andererseits, über welche sich die Auslöseeinheit 4 (axial) an dem Fortsatz 70 des Modulgehäuses 7 abstützt. Einander radial zugewandte (ebene) Anschläge 41, 71 der Auslöseeinheit 4 und des Fortsatzes 70 bewirken eine (radiale) Lagesicherung der Auslöseeinheit 4.

Eine verliersichere Fixierung der Auslöseeinheit 4 in dem Modulgehäuse 7 bzw. im Ausführungsbeispiel genauer im Fortsatz 70 wird durch ein Befestigungselement 3 erreicht. Dieses ragt in den Fortsatz 70 hinein und greift mit einem (im Querschnitt ringförmigen, hohlen) Grundkörper 30 zwischen die ringförmig umlaufende Wand des Fortsatzes 70 und die Auslöseeinheit 4, derart, dass sich die Auslöseeinheit 4 radial an dem Grundkörper 30 des Befestigungselementes 3 abstützen kann.

In dem Bereich des Modulgehäuses 7 bzw. genauer des Bodens des Modulgehäuses 7, in welchem der Fortsatz 70 in die den Gassack 2 aufnehmende Hauptkammer des Modulgehäuses 7 übergeht, weist die am Boden des Modulgehäuses anliegende, im Ausführungsbeispiel durch ein Halteblech gebildete, Gassackhalterung 5 eine Öffnung auf, deren Rand 52 von Rasthaken 32 des Befestigungselementes 3 hintergriffen wird; es kann dabei insbesondere eine Rastverbindung vorliegen. Hierdurch ist das Befestigungselement 3 in einer Position verriegelt, in der es die Auslöseeinheit 4 in dem Fortsatz 70 des Modulgehäuses 7 hält. Hierzu ist an dem Befestigungselement 3 mindestens einen Anschlag 34 vorgesehen, der mit einem zugeordneten Anschlag 44 der Auslöseeinheit 4 zusammenwirkt und zwar axial und dem ersten Anschlagspaar 42, 72 von Auslöseeinheit 4 und Fortsatz 70 gegenüberliegend.

Über die beiden Anschlagspaare 34, 44 und 42, 72 ist daher die Auslöseeinheit 4 axial in dem Fortsatz 70 des Modulgehäuses 7 fixiert. Und senkrecht hierzu (in radialer Richtung) wird sie durch die ringförmig umlaufende Wandung des Fortsatzes 70 sowie durch den in den Fortsatz 70 hineinragenden Grundkörper 30 des Befestigungselementes 3 gehalten.

Die Auslöseeinheit 4 hat zudem die Tendenz, sich beim Auslösen der zugeordneten Gasquelle (in radialer Richtung R) auszudehnen, wodurch die Rasthaken 32 nach außen gedrückt und die Rastwirkung noch verstärkt wird.

In Figur 2 ist weiterhin ein Zwischenraum Z1 zwischen dem Modulgehäuse 7, genauer dessen Boden, einerseits und der daran befestigten Gassackhalterung 5 andererseits angedeutet. Dieser Zwischenraum Z1 resultiert daraus, dass in Figur 2 der im Modulgehäuse 7 anzuordnende Gassack nicht mit dargestellt ist. In dem Zwischenraum Z1 ist der Gassack 2 bei bestimmungsgemäßer Anordnung im Modulgehäuse 7 in üblicher Weise im Bereich seiner Einblasöffnung zwischen dem Gehäuseboden und der Gassackhalterung 5 eingeklemmt.

Anhand einer Zusammenschau der Figuren 1 und 2 wird weiter deutlich, dass die Auslöseeinheit 4 einer Entriegelung des Befestigungselementes 3, genauer der Haken 32 des Befestigungselementes 3 entgegenwirkt. Denn für eine Entriegelung des Befestigungselementes 3 müssten die den Rand 52 der Gassackhalterung hintergreifenden Rasthaken 32 zusammengedrückt bzw. nach innen gedrückt werden, was aber durch die Auslöseeinheit 4 verhindert wird, deren Außenwand einen dem Zusammendrücken der Rasthaken 32 entgegenwirkende Anschlagfläche bildet.

Gemäß den Figuren 1 und 2 weist das Befestigungselement 3 außerdem einen Kopf 38 auf, der den Rand 52 der Öffnung in der Gassackhalterung 5 übergreift. Hierdurch ist in einem zwischen dem Kopf 38 des Befestigungselementes 3 und der Gassackhalterung 5 gebildeten Zwischenraum Z2 das durch einen Druckschlauch gebildete aufblasbare Element 1 im Bereich seiner Einlassöffnung formschlüssig und/oder klemmend festlegbar.

Das Befestigungselement 3 definiert dabei im Bereich des Kopfes 38 einen Durchlass 36, durch den hindurch von der Auslöseeinheit 4 freigesetztes Gas in das aufblasbare Element 1 gelangen kann.

Im Ergebnis dient also ein einzelnes Befestigungselement 3 sowohl zur Festlegung der Auslöseeinheit 4 im Modulgehäuse 7 bzw. genauer in einem Fortsatz 70 des Modulgehäuses 7 als auch zur Fixierung des aufblasbaren Elementes 1 am Modulgehäuse, und zwar derart, dass dieses innerhalb des Gassackes 2 verläuft.

Figur 3 lässt dabei zusätzliche Einzelheiten des Bodens des Modulgehäuses 7 erkennen, an welchem der Fortsatz 70 angeformt ist und an welchem die Gassackhalterung 5 anliegt, vergleiche Figuren 1 und 2.

Danach weist der Boden des Modulgehäuses 7 eine Mehrzahl Befestigungsöffnungen 76 auf, durch die hindurch das Modulgehäuse 7 mit der Gassackhalterung 5 verbindbar ist, wie in den Figuren 1 und 2 dargestellt.

Ferner ist ein großflächiger Ausschnitt 75 vorgesehen, durch den hindurch der Gasgenerator 6 in die Hauptkammer des Modulgehäuses 7 ragt, wie ebenfalls in Figur 1 gezeigt.

Das gemäß dem Ausführungsbeispiel innerhalb des Gassackes 2 angeordnete aufblasbare Element 1 kann alternativ auch außerhalb des Gassackes 2 vorgesehen sein, wie in Figur 2 gestrichelt angedeutet.

## Patentansprüche

1. Airbagmodul für ein Kraftfahrzeug, mit
- einem Gassack (2), der zum Schutz einer Person mittels eines Gasgenerators (6) aufblasbar ist,
- einem Modulgehäuse (7) zur Aufnahme des Gassackes (2), das einen Fortsatz (70) aufweist, der von einer den Gassack (2) aufnehmenden Hauptkammer des Modulgehäuses (7) absteht,
- einer Gassackhalterung (5) zur Festlegung des Gassackes am Modulgehäuse (7),
- einem aufblasbaren Element (1) zur Regulierung des Gasdrucks im Gassack (2), das an der Gassackhalterung (5) festgelegt ist und das vorgesehen ist, im aufgeblasenen Zustand mit einer Entlüftungsöffnung zusammenzuwirken, durch die hindurch aus dem Airbagmodul stammendes Gas entweichen kann,
- einer Auslöseeinheit (4) mit einer Gasquelle zum Befüllen des aufblasbaren Elementes (1) mit Gas, die innerhalb des Modulgehäuses (7) in dem Fortsatz (70) des Modulgehäuses (7) angeordnet ist, wobei die Gasquelle von dem Gasgenerator (6) verschieden ist, und
- einem Befestigungselement (3), mittels dem die Auslöseeinheit (4) am Modulgehäuse (7) fixiert ist,
**dadurch gekennzeichnet,**
**dass** das Befestigungselement (3) mit einem Grundkörper (30), mit dem es die Auslöseeinheit (4) zumindest abschnittsweise umfasst, in den Fortsatz (70) des Modulgehäuses (7) eingreift.

2. Airbagmodul nach Anspruch 1, **dadurch gekennzeichnet, dass** die Auslöseeinheit (4) in einem von den Wänden des Modulgehäuses (7) begrenzten Raum angeordnet ist.

3. Airbagmodul nach Anspruch 1, **dadurch gekennzeichnet, dass** der Fortsatz (70) des Modulgehäuses (7) eine im Querschnitt ringförmig umlaufende Begrenzungswand aufweist.

4. Airbagmodul nach Anspruch 1, **dadurch gekennzeichnet, dass** die Auslöseeinheit (4) mittels des Befestigungselementes (3) formschlüssig am Modulgehäuse fixiert ist.

5. Airbagmodul nach einem der Ansprüche 1 bis 4, **dadurch gekennzeichnet, dass** das Befestigungselement (3) mindestens einen Rasthaken (32) aufweist, mit dem es an der Gassackhalterung (5) und/oder dem Modulgehäuse (7) verrastbar ist.

6. Airbagmodul nach Anspruch 5, **dadurch gekennzeichnet, dass** der mindestens eine Rasthaken (32) des Befestigungselementes (3) durch die Auslöseeinheit (4) an einer Entrastung gehindert wird.

7. Airbagmodul nach Anspruch 6, **dadurch gekennzeichnet, dass** der mindestens eine Rasthaken (32) des Befestigungselementes (3) bei einer Deformation, die zu einem Entrasten führen würde, mit einer Anschlagfläche der Auslöseeinheit (4) zur Anlage gerät, so dass einer weiteren Deformation und damit Entriegelung des Rasthakens entgegengewirkt wird.

8. Airbagmodul nach einem der vorhergehenden Ansprüche, **dadurch gekennzeichnet, dass** das Befestigungselement (3) einen Durchlass (36) aufweist, durch den hindurch von der Auslöseeinheit (4) freigesetztes Gas in das aufblasbare Element (1) strömen kann.

9. Airbagmodul nach einem der vorhergehenden Ansprüche, **dadurch gekennzeichnet, dass** die Auslöseeinheit (4) zwischen dem Befestigungselement (3) und einem Anschlag (72) des Modulgehäuses (7) gehalten wird.

10. Airbagmodul nach Anspruch 9, **dadurch gekennzeichnet, dass** der Anschlag (72) am Fortsatz (70) des Modulgehäuses (7) ausgebildet ist.

11. Airbagmodul nach einem der vorhergehenden Ansprüche, **dadurch gekennzeichnet, dass** das aufblasbare Element (1) als ein aufblasbarer Schlauch ausgeführt ist.

12. Airbagmodul nach einem der vorhergehenden Ansprüche, **dadurch gekennzeichnet, dass** das aufblasbare Element (1) innerhalb des Gassackes (2) angeordnet ist.

13. Airbagmodul nach einem der vorhergehenden Ansprüche, **dadurch gekennzeichnet, dass** das Befestigungselement (3) zusätzlich zur Festlegung des aufblasbaren Elementes (1) an der Gassackhalterung (5) dient.

14. Airbagmodul nach Anspruch 13, **dadurch gekennzeichnet, dass** das aufblasbare Element (1) zwischen einem Kopf (38) des Befestigungselementes (3) und der Gassackhalterung (5) verklemmt ist.

15. Airbagmodul nach einem der vorhergehenden Ansprüche, **dadurch gekennzeichnet, dass** der Austrittsquerschnitt der Entlüftungsöffnung durch Befüllen des aufblasbaren Elementes (1) mit Gas vergrößert oder verkleinert wird.

## Claims

1. An airbag module for a motor vehicle, comprising
- a gas bag (2) which for the protection of a person can be inflated by means of a gas generator (6),
- a module housing (7) for accommodating the gas bag (2), which includes a projection (70) which protrudes from a main chamber of the module housing (7) accommodating the gas bag (2),
- a gas bag holder (5) for fixing the gas bag at the module housing (7),
- an inflatable element (1) for regulating the gas pressure in the gas bag (2), which is fixed at the gas bag holder (5) and which in the inflated condition is provided to interact with a vent opening through which gas originating from the airbag module can escape,
- a triggering unit (4) comprising a gas source for filling the inflatable element with gas, which is arranged within the module housing (7) in the projection (70) of the module housing (7), wherein the gas source is different from the gas generator (6), and
- a fixing element (3) by means of which the triggering unit (4) is fixed at the module housing (7),
**characterized in**
**that** the fixing element (3) with a base body (30), with which it at least sectionally encloses the triggering unit (4), engages into the projection (70) of the module housing (7).

2. The airbag module according to claim 1, **characterized in that** the triggering unit (4) is arranged in a space defined by the walls of the module housing (7).

3. The airbag module according to claim 1, **characterized in that** the projection (70) of the module housing (7) has a boundary wall extending annularly in cross-section.

4. The airbag module according to claim 1, **characterized in that** the triggering unit (4) is positively fixed at the module housing by means of the fixing element (3).

5. The airbag module according to any of claims 1 to 4, **characterized in that** the fixing element (3) includes at least one latching hook (32) with which it can be latched at the gas bag holder (5) and/or the module housing (7).

6. The airbag module according to claim 5, **characterized in that** the at least one latching hook (32) of the fixing element (3) is prevented from unlatching by the triggering unit (4).

7. The airbag module according to claim 6, **characterized in that** during a deformation which would lead to unlatching the at least one latching hook (32) of the fixing element (3) gets in contact with a stop surface of the triggering unit (4), so that a further deformation and hence unlocking of the latching hook is counteracted.

8. The airbag module according to any of the preceding claims, **characterized in that** the fixing element (3) includes an aperture (36) through which gas released by the triggering unit (4) can flow into the inflatable element (1).

9. The airbag module according to any of the preceding claims, **characterized in that** the triggering unit (4) is held between the fixing element (3) and a stop (72) of the module housing (7).

10. The airbag module according to claim 9, **characterized in that** the stop (72) is formed at the projection (70) of the module housing (7).

11. The airbag module according to any of the preceding claims, **characterized in that** the inflatable element (1) is designed as inflatable hose.

12. The airbag module according to any of the preceding claims, **characterized in that** the inflatable element (1) is arranged within the gas bag (2).

13. The airbag module according to any of the preceding claims, **characterized in that** the fixing element (3) additionally serves for fixing the inflatable element (1) at the gas bag holder (5).

14. The airbag module according to claim 13, **characterized in that** the inflatable element (1) is clamped between a head (38) of the fixing element (3) and the gas bag holder (5).

15. The airbag module according to any of the preceding claims, **characterized in that** the outlet cross-section of the vent opening is increased or reduced by filling the inflatable element (1) with gas.

## Revendications

1. Module de coussin gonflable pour un véhicule automobile, avec
- un sac de gaz (2), qui peut être gonflé au moyen d'un générateur de gaz (6) pour la protection d'une personne,
- un boîtier de module (7) pour contenir le sac de gaz (2), qui présente un prolongement (70), qui fait saillie à partir d'une chambre principale du boîtier de module (7) contenant le sac de gaz (2),
- un support du sac de gaz (5) pour la fixation du sac de gaz au boîtier de module (7),
- un élément gonflable (1) pour la régulation de la pression de gaz dans le sac de gaz (2), qui est fixé sur le support du sac de gaz (5) et qui est prévu pour coopérer dans l'état gonflé avec une ouverture d'aération, à travers laquelle du gaz provenant du module de coussin gonflable peut s'échapper,
- une unité de déclenchement (4) avec une source de gaz pour le remplissage de l'élément gonflable (1) avec du gaz, qui est disposée à l'intérieur du boîtier de module (7) dans le prolongement (70) du boîtier de module (7), dans lequel la source de gaz est différente du générateur de gaz (6), et
- un élément de fixation (3), au moyen duquel l'unité de déclenchement (4) est fixée au boîtier de module (7),
**caractérisé en ce que** l'élément de fixation (3) s'engage avec un corps de base (30), avec lequel il entoure au moins en partie l'unité de déclenchement (4), dans le prolongement (70) du boîtier de module (7).

2. Module de coussin gonflable selon la revendication 1, **caractérisé en ce que** l'unité de déclenchement (4) est disposée dans un espace limité par les parois du boîtier de module (7).

3. Module de coussin gonflable selon la revendication 1, **caractérisé en ce que** le prolongement (70) du boîtier de module (7) présente une paroi de limitation périphérique de section transversale annulaire.

4. Module de coussin gonflable selon la revendication 1, **caractérisé en ce que** l'unité de déclenchement (4) est fixée par emboîtement sur le boîtier de module au moyen de l'élément de fixation (3).

5. Module de coussin gonflable selon l'une quelconque des revendications 1 à 4, **caractérisé en ce que** l'élément de fixation (3) présente au moins un crochet d'encliquetage (32), avec lequel il peut être encliqueté sur le support du sac de gaz (5) et/ou sur le boîtier de module (7).

6. Module de coussin gonflable selon la revendication 5, **caractérisé en ce que** ledit au moins un crochet d'encliquetage (32) de l'élément de fixation (3) est empêché de se libérer au moyen de l'unité de déclenchement (4).

7. Module de coussin gonflable selon la revendication 6, **caractérisé en ce que** ledit au moins un crochet d'encliquetage (32) de l'élément de fixation (3) vient s'appuyer sur une face de butée de l'unité de déclenchement (4), lors d'une déformation qui conduirait à une libération, de façon à s'opposer à une autre déformation et ainsi à un déverrouillage du crochet d'encliquetage.

8. Module de coussin gonflable selon l'une quelconque des revendications précédentes, **caractérisé en ce que** l'élément de fixation (3) présente un passage (36), à travers lequel du gaz libéré par l'unité de déclenchement (4) peut s'écouler dans l'élément gonflable (1).

9. Module de coussin gonflable selon l'une quelconque des revendications précédentes, **caractérisé en ce que** l'unité de déclenchement (4) est maintenue entre l'élément de fixation (3) et une butée (72) du boîtier de module (7).

10. Module de coussin gonflable selon la revendication 9, **caractérisé en ce que** la butée (72) est formée sur le prolongement (70) du boîtier de module (7).

11. Module de coussin gonflable selon l'une quelconque des revendications précédentes, **caractérisé en ce que** l'élément gonflable (1) est réalisé sous la forme d'un tuyau souple gonflable.

12. Module de coussin gonflable selon l'une quelconque des revendications précédentes, **caractérisé en ce que** l'élément gonflable (1) est disposé à l'intérieur du sac de gaz (2).

13. Module de coussin gonflable selon l'une quelconque des revendications précédentes, **caractérisé en ce que** l'élément de fixation (3) sert en plus pour la fixation de l'élément gonflable (1) sur le support du sac de gaz (5).

14. Module de coussin gonflable selon la revendication 13, **caractérisé en ce que** l'élément gonflable (1) est pincé entre une tête (38) de l'élément de fixation (3) et le support du sac de gaz (5).

15. Module de coussin gonflable selon l'une quelconque des revendications précédentes, **caractérisé en ce que** la section transversale de sortie de l'ouverture d'aération est agrandie ou réduite par remplissage de l'élément gonflable (1) avec du gaz.
